# EUROPEAN PATENT APPLICATION

(11) **EP 4 809 803 A1**
(43) Date of publication of application: **23.09.2026**
(21) Application number: 26164323.3
(22) Date of filing: 12.03.2026
(51) Int. Cl.: A01C 11/02

(54) **EJECTION ASSEMBLY FOR AGRICULTURAL MACHINES**

(30) Priority: 17.03.2025 IT 202500005319
(71) Applicant: Checchi e Magli S.r.l., 40054 Budrio BO (IT)
(72) Inventor: LAZZARI, Lorenzo, 40061 MINERBIO BO (IT)
(74) Representative: Modiano, Micaela Nadia

(57) **Abstract**

An ejection assembly for agricultural machines, which is adapted to lay plant elements (A) along a stretch of land.

The assembly (1) comprises at least:
- a funnel (2) which defines a duct (3) for dropping plant elements (A) individually, which has at least one access inlet (3a) and, on the opposite side, a discharge opening (3b), for laying the plant elements (A) along a stretch of land,
- an ejection device (4), which can be actuated on command to forcibly remove plant elements (A) one by one from the duct (3), through the discharge opening (3b),

- an electronic control and management unit (5), configured to actuate the ejection device (4) and equipped with instructions for calculating the moment of activation of the ejection device (4) at least based on the release of a plant element (A) into the inlet (3a) and the time taken by the plant element (A) to pass through the duct (3).

## Description

The present invention relates to an ejection assembly for agricultural machines.

As is known, among the various types of agricultural machines, transplanting machines are widespread and are used to transplant, along a stretch of land, plant elements constituted by seedlings which are already partially germinated in another growth location. Evidently, the use of such machines makes it possible to automate at least partially an activity that, if performed manually as in the past, is particularly burdensome for the laborers involved and requires decidedly more time (often unacceptable for the needs of the market), with a consequent limit on the hourly productivity that can be obtained.

Machines of the type described above therefore comprise a frame which can be coupled to a tractor, so that it can be towed along the ground of interest, a magazine for receiving plant elements (i.e. seedlings, fixed to respective substrates of the type for example of a plug of turf), a furrowing apparatus which opens the furrow along the soil intended to receive the plant elements, and means for manipulation and movement, which according to various methods which are at least partially automated, retrieve the plant elements from the magazine and lay them one by one in the furrow just opened, in order to perform the transplantation.

Such implementation solutions are not devoid of drawbacks, however.

In conventional transplanting machines, the deposit of the seedlings in the furrow is usually entrusted to systems of the mechanical type, which receive the plant elements from other distribution contrivances, at least partially automated, and which are responsible for releasing them onto the ground.

However, such systems are afflicted by considerable drawbacks in terms of turnaround times and in general the capacity to ensure a correct deposit of all the plant elements. In addition, they are very complex to calibrate to the variation in the forward travel speed and to the variation in the falling time of the plant element: this leads to serious difficulties in ensuring a uniform distribution of the plant elements on the ground (which must be arranged at a constant distance from each other along the rows that are progressively formed along the soil).

The aim of the present invention is to solve the above-mentioned problems, by providing an ejection assembly for agricultural machines that ensures an optimal deposit in the ground of plant elements.

Within this aim, an object of the invention is to provide an agricultural transplanting machine that is capable of planting plant elements in the ground in an optimal manner.

Another object of the invention is to provide an ejection assembly and an agricultural machine that are capable of evenly distributing the plant elements progressively planted on the ground.

Another object of the invention is to provide an ejection assembly and an agricultural machine that are capable of ensuring uniformity of distribution of the plant elements even with the variation of the forward travel speed and/or of the falling time of the plant elements.

Another object of the invention is to provide an ejection assembly and an agricultural machine that overcome the drawbacks of the prior art in a manner different from any existing solutions.

Another object of the invention is to provide an ejection assembly and an agricultural machine that are highly reliable and certain to be safe in use.

Another object of the invention is to provide an ejection assembly and an agricultural machine that can be implemented relatively simply and at low cost.

This aim and these and other objects which will become more apparent hereinafter are achieved by an ejection assembly according to claim 1, optionally provided with one or more of the characteristics of the dependent claims, and by an agricultural machine according to claim 10.

Further characteristics and advantages of the invention will become more apparent from the description of a preferred, but not exclusive, embodiment of the ejection assembly and of the agricultural machine according to the invention, which is illustrated by way of non-limiting example in the accompanying drawings wherein:
Figure 1 is a side view of the ejection assembly according to the invention, in a first moment of operation;
Figure 2 is a side view of the ejection assembly according to the invention, in a second moment of operation;
Figure 3 is a perspective view of the agricultural transplanting machine according to the invention, seen from the rear and from the side;
Figure 4 is a perspective view of a portion of the agricultural machine of Figure 3, seen from the rear and from the side.

With particular reference to the figures, the reference numeral 1 generally designates an ejection assembly for agricultural machines, which is adapted to lay plant elements A along a stretch of land.

The assembly 1 can be used for laying plant elements A of any type and for any purpose; in particular, it can be installed on agricultural machines of any type, while remaining within the scope of protection claimed herein.

At the same time, the scope of protection claimed herein also extends to a specific use of the assembly 1 (which is therefore preferred, but not exclusive), in which the assembly 1 is mounted on board an agricultural transplanting machine 100, which will be described below.

In such case, therefore, it is precisely the laying of the plant elements A by the assembly 1 that makes it possible to place them inside a furrow provided along a stretch of land and therefore to obtain the transplantation.

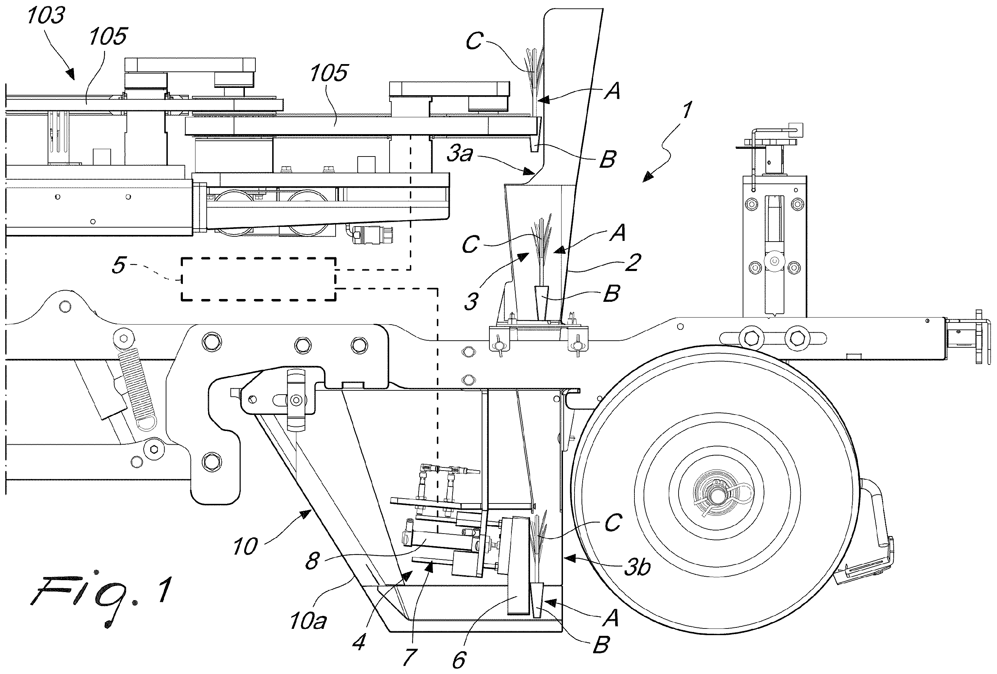

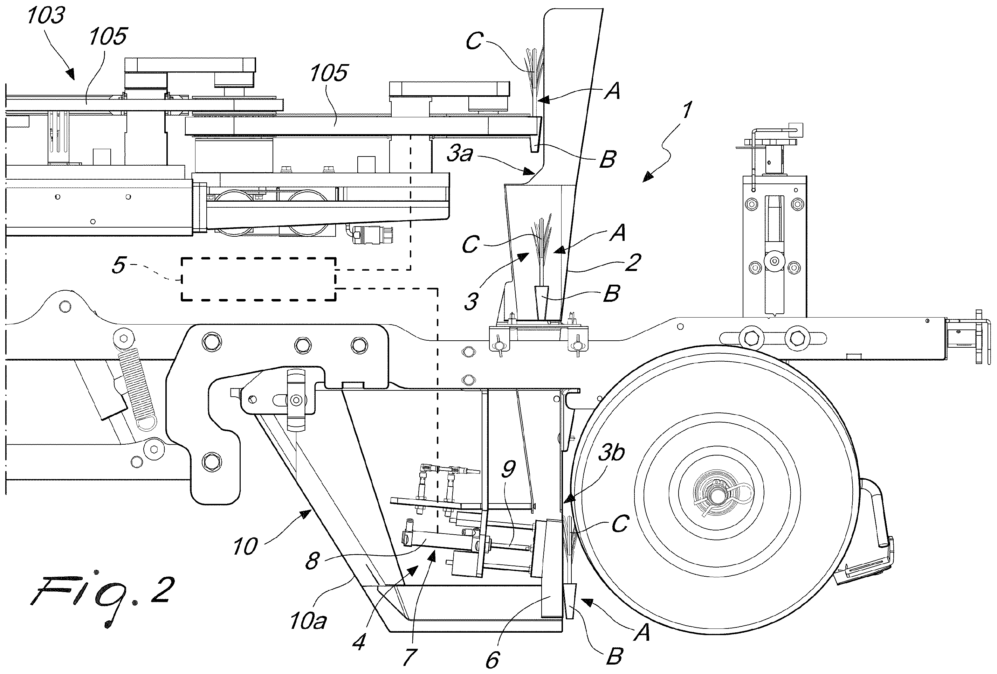

In this context, as in the accompanying Figures 1 and 2, each plant element A can comprise a base substrate B and a seedling C which is (stably) coupled to the substrate B. The seedlings C can be any plant variety that has undergone a first life cycle (or which has at least partially germinated) in another cultivation location (a nursery seed tray, a greenhouse, etc). The substrate B, for example, can be a plug of turf or of another material.

It should be noted however that the scope of protection claimed herein is understood to include any type of plant element A and any agricultural machine (for transplanting or otherwise) that comprises one or more assemblies 1, and also the use, the exploitation, the production, the sale or the offer for sale of assemblies 1, be they fitted as standard on any agricultural machine (for transplanting or otherwise) or supplied separately.

According to the invention, the ejection assembly 1 comprises at least, first of all, a funnel 2 which defines (internally) a duct 3 for the plant elements A to fall through one by one (by simple gravity). As clearly shown in Figures 1 and 2, in use the duct 3 is arranged substantially vertically; it is preferably chosen to be of dimensions that are such as to force the plant elements A to maintain, for all the time necessary for them to pass through, the same orientation with which they are introduced inside: this orientation is the one that each plant element A must assume on the ground, after laying, with the substrate B in a downward region and the seedling C rising upward from it.

The duct 3 has at least one access inlet 3a and, at the opposite end, a discharge opening 3b, for laying the plant elements A along the ground.

In use, the inlet 3a is typically directed upward while the opening 3b is facing outward, proximately to the ground. In particular, as in the accompanying figures, the opening 3b is preferably provided along a side of the funnel 2, even more preferably at one of its end portions (at the opposite end, obviously, from the inlet 3a).

Furthermore, according to the invention the assembly 1 comprises at least one ejection device 4, which can be actuated on command to forcibly remove plant elements A one by one from the duct 3, through the opening 3b.

Furthermore, according to the invention the assembly 1 comprises at least one electronic control and management unit 5, which is configured at least to actuate the ejection device 4 and which is equipped with instructions at least for calculating (for each plant element A to be evacuated) the moment of activation of the ejection device 4 at least based on the release of a plant element A into the inlet 3a and the (estimated) time taken by the plant element A to pass through the duct 3.

In other words, when a plant element A is about to be released into the inlet 3a (typically, a few moments before the substrate B enters the latter, but it could also be at the same moment, or a few moments after), the information about this fact is supplied to the electronic unit 5; the latter then activates the ejection device 4 with a delay time corresponding to the time necessary for each plant element A to pass through the duct 3 (as mentioned, by simple gravity), so that the device 4 is activated just when the plant element A reaches the bottom of the duct 3 (or in any case when it is facing the opening 3b). The passthrough time necessary can be supplied to the unit 5 by an operator and/or be stored in a data bank of the unit 5, which is optionally provided with an interface in order to allow an operator to modify this data item at any time.

Therefore the set aim is achieved from this point onward: the release of the plant elements A occurs by simple falling into the funnel 2, which is responsible for directing it toward the ground without the need for specific dedicated equipment, but with the sole aid of the device 4, which is actuated at the exact moment when the plant element A is facing the opening 3b, in order to obtain the evacuation from the duct 3 and therefore the laying on the ground.

This ensures an optimal deposit of the plant elements A, without complex mechanical apparatuses and without requiring frequent or laborious adjustment by operators.

Furthermore, if a regular frequency of supply of the assembly 1 is maintained, such assembly ensures a uniform distribution on the ground of the plant elements A, given that the step of fall-and-release occurs regularly with constant times for each plant element.

The electronic unit 5 is shown only schematically in the accompanying Figures 1 and 2, but it can be of conventional type, and for example it can comprise or be constituted by a controller, a PLC, a computer, another form of hardware, reprogrammable or otherwise (for example with a microprocessor).

Typically the electronic unit 5 is the same unit that governs the entire assembly 1 and optionally the entire machine 100. However, the possibility is not ruled out that the electronic unit 5 can be a dedicated electronic apparatus, to be mounted on the assembly 1 and intended to interact with the other components described herein solely for the purposes that the invention sets out to achieve.

In the embodiment in the accompanying figures, which is illustrative and not limiting of the invention, the device 4 comprises a thrust block 6 which faces the opening 3b and an actuator 7, which is driven by the unit 5 and which is configured to move the thrust block 6 between at least one first position, in which the block 6 is spaced apart from the opening 3b (as in Figure 1), and a second position, in which the block 6 is arranged substantially at the opening 3b (as in Figure 2).

The thrust block 6 is normally kept in the first position: thus, following the falling along the duct 3 each plant element A can come to arrange itself between the block 6 and the opening 3b (as in the case of the lowermost plant element A in Figure 1); as soon as this happens, the unit 5 actuates the actuator 7 and the block 6 is brought to the second position, taking with it the plant element A which is thus evacuated through the opening 3b, while it is kept in the desired orientation.

Even more specifically, the actuator 7 can comprise a cylinder 8 and a rod 9, which (rigidly) supports the block 6 and which can move with an alternating straight motion with respect to the cylinder 8 (so as to move the block 6 from the first to the second position and vice versa).

In the preferred embodiment, which in any case is not limiting of the application of the invention, the thrust block 6 comprises at least one flattened face 6a, which faces the opening 3b and is configured to intercept the plant elements A and thus to evacuate them (by pushing them) through the opening 3b, during the transition from the first position to the second position. The dimensions of the face 6a can be chosen as a function of the plant element A to be laid; it is also possible to equip the assembly 1 with an interchangeable block 6, so as to vary the dimensions of the face 6a as the plant element A to be handled varies.

Usefully, the funnel 2 can have a substantially tubular shape and, in at least one longitudinal portion thereof, a transverse cross-section that progressively decreases from the access inlet 3a to the discharge opening 3b. The decreasing cross-section enables an optimal conveyance of the plant element A, so favoring the maintenance of the desired orientation.

Even more specifically, as shown in the accompanying figures, the funnel 2 ideally comprises two longitudinal segments arranged in series, each one with a progressively decreasing transverse cross-section.

Advantageously, the assembly 1 can comprise a plowshare 10, which has a sharp edge 10a adapted to form a furrow, following the dragging of the plowshare 10 (and of the assembly 1) along a stretch of land. The funnel 2 is arranged adjacent to the plowshare 10, on the opposite side from the edge 10a.

Effectively, the plowshare 10 has an elongated outline along a direction that coincides with the direction in which, during use, the assembly 1 will be made to advance. Therefore, along this direction are located the edge 10a, facing forward with respect to the advancement direction, and the funnel 2, at the opposite end. The opening 3b in turn is facing away from the edge 10a and is aligned with it, so as to deposit in the furrow just opened the plant elements A which are progressively released onto the ground.

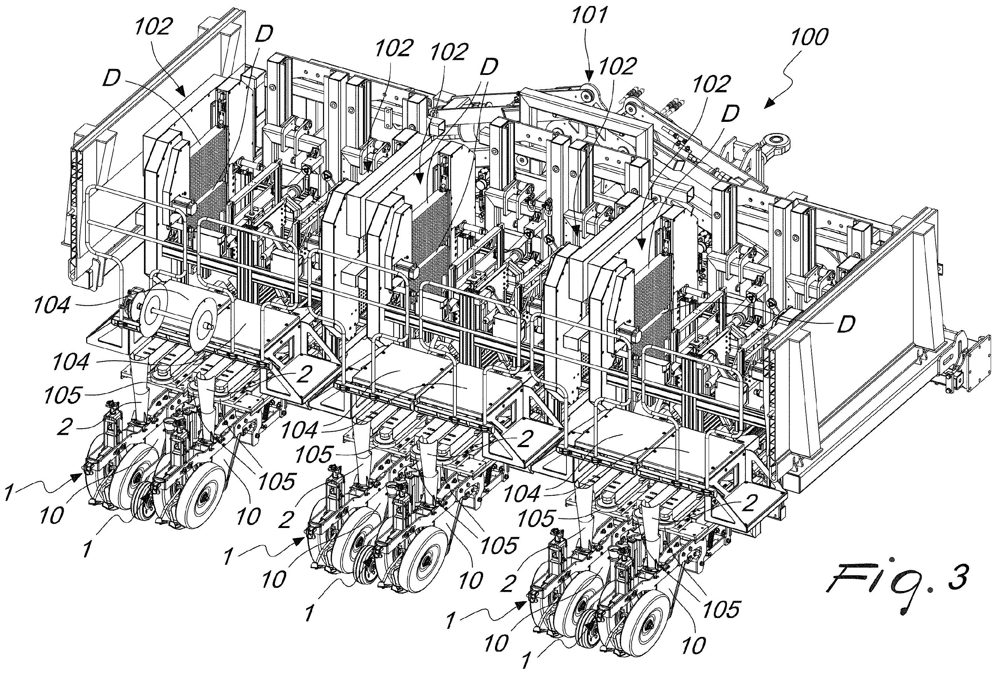

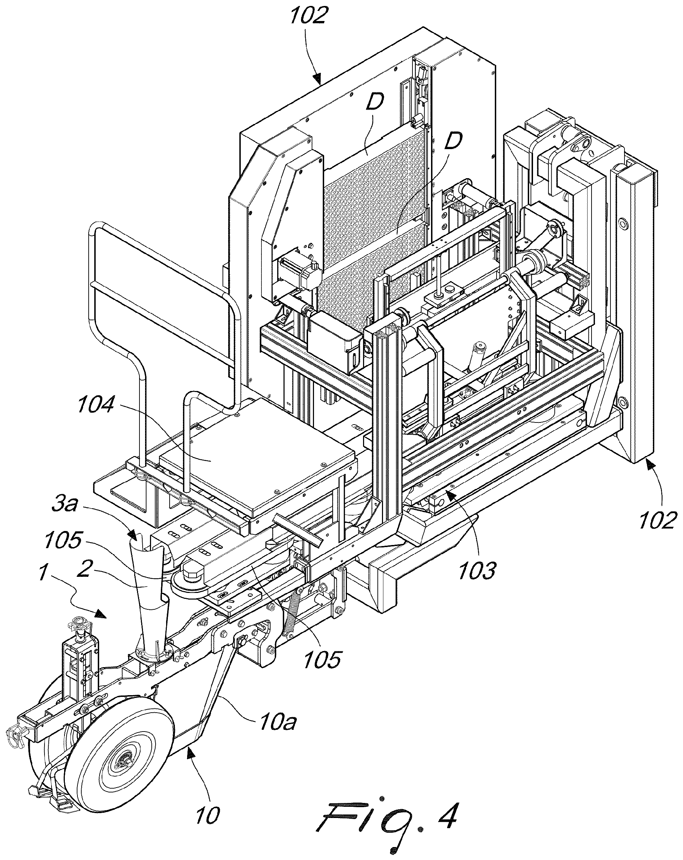

As mentioned above, in addition to the assembly 1, protection is also claimed herein for an agricultural transplanting machine 100, of which an exemplary embodiment (which should not be understood as in any way limiting of the scope of protection) is shown in Figures 3 and 4.

The machine 100 comprises at least one supporting frame 101; the frame 101 can be configured to be coupled to a farm tractor (not shown in the accompanying figures, but which can be conventional).

Furthermore, it is also possible to install the machine 100 on a self-propelled vehicle, so as to make the machine 100 usable even in the absence of tractors.

The coupling and/or the installation can be done in any way that the person skilled in the art deems appropriate. The frame 101 can also be collapsible, in order to enable a temporary reduction in the bulk (in particular the transverse footprint) of the machine 100 and so facilitate road travel.

Furthermore, the machine 100 comprises at least one magazine 102 for accommodating plant elements A intended for transplanting, each preferably comprising a base substrate B and a seedling C coupled to the substrate B. These are the plant elements A described on the foregoing pages. The magazine 102 can comprise a compartment for accommodating nursery seed trays D containing the plant elements A to be transplanted; furthermore, the magazine 102 can be optionally provided with an apparatus for moving the trays D forward and/or ejecting the empty trays D. The magazine 102 can in any case be provided in any manner, while remaining within the scope of protection claimed herein. Typically, the magazine 102 is supported directly or indirectly by the frame 101.

Furthermore, the agricultural machine 100 comprises means for laying the plant elements A one by one on the ground and a movement system 103 for plant elements A, which is configured to retrieve the plant elements A from the magazine 102 (and therefore, for example, from the trays D) and deliver them one by one to the laying means.

Typically, the laying means and the movement system 103 are also supported directly or indirectly by the frame 101.

The machine 100 can further be provided with one or more walkable platforms 104, which make it possible for operators to perform the operations to supply each magazine 102 and to load/unload full/empty trays D.

According to the invention, the laying means comprise (or are constituted by) at least one ejection assembly 1 according to what is shown on the foregoing pages.

Effectively, therefore, the plant elements A are delivered by the movement system 103 to the ejection assembly 1, which then deposits them in the furrow which, preferably, the assembly 1 has opened (although the possibility exists of using a dedicated furrowing apparatus for this purpose).

As shown in the accompanying figures, preferably the machine 100 is of the modular type: it can comprise a plurality of modules side-by-side (there are six in Figure 3); each module (like the module in Figure 4) comprises a magazine 102, a movement system 103, and an assembly 1.

Each module places plant elements A to be transplanted along the ground, forming a respective row, parallel to the advancement direction.

Usefully, the system 103 can comprise at least one pair of laterally-adjacent sandwich conveyor belts 105 (or a plurality of pairs arranged in series), which are configured to hold plant elements A and move them along a predefined trajectory, which leads to the assembly 1.

The distance between the two laterally-adjacent belts 105 (or between each pair of laterally-adjacent belts 105, arranged along the predefined trajectory) is chosen so as to hold the plant elements A sandwiched between them: while the belts 105 slide close together (according to methods that are well known), they make the plant elements A advance one by one, until they are delivered to the assembly 1.

In more detail, as can be clearly seen from Figures 1 and 2, the downstream end of the pair of belts 105 (or of the pair of belts 105 that is furthest downstream) is directed toward the inlet 3a of the duct 3.

When a plant element A reaches that end (like the uppermost plant element A in Figures 1 and 2), an additional movement of the belts 105 causes it to fall and automatically be conveyed into the duct 3, through the inlet 3a.

The movement system 103 can further comprise other contrivances, including conventional devices, which receive and/or accept the plant elements A from the magazine 102 and transfer them to the belts 105.

Usefully, the instructions with which the electronic control and management unit 5 is equipped can calculate the moment of activation of the ejection device 4 based on the release of a plant element A into the inlet 3a by the pair of belts 105 and, as mentioned above, based on the time taken by the plant element A to pass through the duct 3.

In other words, therefore, it is the release of each element A by the belts 105 (of the pair of belts 105 that is furthest downstream) that can be the event that enables the unit 5 to determine the correct moment of activation of the ejection device 4.

Advantageously, the machine 100 can comprise an electronic device for controlling and managing the pair of belts 105 (or each pair of belts 105), which is configured to regulate the forward travel speed of the plant elements A along the predefined trajectory (and therefore also their release to the assembly 1), based on the forward travel speed along the ground of the frame 101 (and of the entire machine 100).

In this manner, it is possible to accelerate or decelerate the advancement of the plant elements A as the speed of the machine 100 varies, and to ensure that the plant elements A are delivered to the assembly 1 with regular frequency in any case; as mentioned above, by virtue of the particular operating mode of the assembly 1, this makes it possible to ensure a uniform distribution along the ground of the plant elements A.

The electronic contrivance can be integrated in the unit 5 or it can coincide with it (i.e., the unit 5 performs both the tasks described on the foregoing pages and the tasks just mentioned). However, the possibility is not ruled out of using an independent solution (independent of the unit 5), while remaining within the scope of protection claimed herein.

The operation of the distribution assembly 1 and of the agricultural transplanting machine 100 according to the invention can be easily understood from the foregoing pages, but in any case a brief summary is also given below.

The assembly 1 and the machine 100 can be made advance along the ground of interest using a tractor or by being installed on a self-propelled vehicle, and during the advancement the assembly 1 lays the plant elements A on the ground, forming rows that are mutually parallel and parallel to the advancement direction.

In particular, each plant element A that is released (for example by the belts 105) into the inlet 3a of the duct 3 falls by gravity, being simply guided or conveyed by the funnel 2, which is contoured so as to bring the plant element A before the discharge opening 3b, interposed between it and the ejection device 4, which evacuates the plant element A by laying it in the furrow (which is opened preferably by the plowshare 10).

The device 4 is actuated by the unit 5 based on the release into the inlet 3a of the plant element A and of the time taken to pass through the duct 3. The unit 5 therefore ensures a perfect synchronization, which makes it possible for the plant element A to be evacuated from the duct 3 at the exact moment when it reaches the bottom of it (or in any case as soon as it is facing the opening 3b).

In turn, the moment when the release of each plant element A into the duct 3 occurs can be chosen as a function of the forward travel speed of the assembly 1 and therefore of the machine 100 on which is mounted.

Thus it is possible to obtain an excellent laying of each plant element A on the ground: the laying takes account of the moment of release, of the passthrough time, and optionally of the forward travel speed, in so doing likewise ensuring a uniform distribution on the ground and great precision, even if there is a variation of the forward travel speed and/or of the falling time of the plant elements A.

Such results are obtained without requiring continual adjustments by the operator, which owing to the high speed at which the invention can operate (4 or more plant elements A laid per second) would in any case not be efficacious.

In practice it has been found that the agricultural ejection assembly and the agricultural transplanting machine according to the invention fully achieve the set aim and objects, in that the use of an electronic unit 5 to activate the evacuation from the duct 3 as a function of the moment of release of each plant element A released into the duct 3 and taking account of the passthrough time ensures an optimal deposit onto the ground of the plant elements A.

The invention thus conceived is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102025000005319 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each component or object identified by way of example by such reference signs.

## Claims

1. An ejection assembly for agricultural transplanting machines, which is adapted to lay plant elements (A) along a stretch of land, **characterized in that** it comprises at least:
- a funnel (2) which defines a duct (3) for dropping plant elements (A) individually, which has at least one access inlet (3a) and, on the opposite side, a discharge opening (3b), for laying the plant elements (A) along a stretch of land,
- an ejection device (4), which can be actuated on command to forcibly remove plant elements (A) one by one from said duct (3), through said discharge opening (3b),
- an electronic control and management unit (5), configured at least to actuate said ejection device (4) and equipped with instructions at least for calculating the moment of activation of said ejection device (4) at least based on the release of a plant element (A) into said inlet (3a) and the time taken by the plant element (A) to pass through said duct (3).

2. The ejection assembly according to claim 1, **characterized in that** said ejection device (4) comprises a thrust block (6) which faces said opening (3b) and an actuator (7), driven by said unit (5) and configured to move said thrust block (6) between at least one first position, in which it is spaced apart from said opening (3b), and a second position, in which it is arranged substantially at said opening (3b).

3. The ejection assembly according to claim 2, **characterized in that** said actuator (7) comprises a cylinder (8) and a rod (9), which supports said block (6) and can move with an alternating straight motion with respect to said cylinder (8).

4. The ejection assembly according to claim 2 or 3, **characterized in that** said block (6) comprises at least one flattened face (6a) which faces said opening (3b) and is configured to intercept plant elements (A) and evacuate them through said opening (3b) during the transition from said first position to said second position.

5. The ejection assembly according to one or more of the preceding claims, **characterized in that** said funnel (2) has a substantially tubular shape structure and, in at least one longitudinal portion thereof, a transverse cross-section that progressively decreases from said access inlet to said discharge opening (3b).

6. The ejection assembly according to one or more of the preceding claims, **characterized in that** it comprises a plowshare (10), having a sharp edge (10a) adapted to form a furrow, following the dragging of said plowshare (10) along a stretch of land, said funnel (2) being arranged adjacent to said plowshare (10), on the opposite side from said edge (10a).

7. An agricultural transplanting machine comprising at least:
- a supporting frame (101),
- a magazine (102) for accommodating plant elements (A) intended for transplanting,
- means for laying plant elements (A) one by one on the ground,
- a system (103) for moving plant elements (A), which is configured to retrieve plant elements (A) from said magazine (102) and deliver them one by one to said means,
**characterized in that** said means comprise at least one ejection assembly (1) according to one or more of the preceding claims.

8. The machine according to claim 7, **characterized in that** said system (103) comprises at least one pair of laterally-adjacent sandwich conveyor belts (105) which are configured to hold plant elements (A) and move them along a predefined trajectory, which leads to said assembly (1).

9. The machine according to claim 8, **characterized in that** said instructions of said electronic control and management unit (5) entail calculating the moment of activation of said ejection device (4) based on the release of a plant element (A) into said inlet (3a) by said pair of said belts (105) and the time taken by the plant element (A) to pass through said duct (3).

10. The machine according to claim 8 or 9, **characterized in that** it comprises an electronic device for controlling and managing said pair of said belts (105), which is configured to adjust the advancement of the plant elements (A) along said trajectory, based on the speed of advancement of said frame (101) along the ground.
